# EUROPÄISCHE PATENTSCHRIFT

(11) **EP 1 437 525 B1**
(45) Veröffentlichungstag und Bekanntmachung des Hinweises auf die Patenterteilung: **23.03.2005**
(21) Anmeldenummer: 03028069.7
(22) Anmeldetag: 09.12.2003
(51) Int. Cl.: F16F 9/512

(54) **Einrichtung für hydraulische Schwingungsdämpfer**
Arrangement for hydraulic dampers
Agencement pour amortisseurs hydrauliques

(30) Priorität: 07.01.2003 DE 10300107
(43) Veröffentlichungstag der Anmeldung: 14.07.2004
(73) Patentinhaber: ThyssenKrupp Bilstein GmbH, 58256 Ennepetal (DE)
(72) Erfinder: Drees, Helmut, Dipl.-Ing., 58256 Ennepetal (DE)

(56) Entgegenhaltungen:
- EP-A- 1 152 166
- DE-B- 1 264 165
- PATENT ABSTRACTS OF JAPAN vol. 1998, no. 06, 30. April 1998 (1998-04-30) & JP 10 038010 A (KAYABA IND CO LTD), 13. Februar 1998 (1998-02-13)

## Beschreibung

Die Erfindung betrifft eine Einrichtung für hydraulische Schwingungsdämpfer, die ein Dämpfergehäuse aufweisen, in die oszillierend eine Kolbenstange eintaucht, an deren Ende ein Dämpfungskolben angeordnet ist, der das Dämpfergehäuse in zwei Dämpfungsräume aufteilt. Bei derartigen Schwingungsdämpfem kann es sich um Einrohr- oder Zweirohrdämpfer handeln. Der Dämpfungskolben ist mit Durchflussquerschnitten ausgebildet, die mit Federscheiben die Dämpfung in Zugrichtung bzw. in Druckrichtung vornehmen.

Um zu erreichen, dass Schwingungen mit geringen Amplituden, die den Dämpfungskolben beaufschlagen, nicht zu einem Losbrechen der Federpakete und damit zu einem unruhigen Dämpfungsverhalten führen, ist es aus der EP 1 152 166 A1 bekannt, hydraulisch parallel zum Dämpfungskolben in einem separaten Raum begrenzt beweglich einen Ausgleichskolben anzuordnen. Dabei wird dieser Ausgleichskolben bei einer Ausbildung an der von der Kolbenstange abgewandten Seite des Dämpfungskolbens angeordnet, was nachteilig zu einem verkürzten radialen Abstützmoment für die Kolbenstange führt. Alternativ dazu wird der Ausgleichskolben in einem zwischen Kolbenstangenende und Dämpfungskolben angeordneten Adapter angeordnet, wodurch nachteilig eine aufwändige Konstruktion entsteht und weiterhin nachteilig die Anbindung des Dämpfungskolbens an die Kolbenstange naturgemäß weniger starr ausgebildet ist.

Der Erfindung liegt die Aufgabe zugrunde, die vorstehend beschriebenen Nachteile des Standes der Technik zu beheben und den Ausgleichskolben derartig auszubilden und anzuordnen, dass zum einen eine feste und sichere Anbindung des Dämpfungskolbens an die Kolbenstange gewährleistet ist und zum anderen eine maximale Abstützlänge der Kolbenstange im Dämpfergehäuse erzielt wird.

Die Lösung der vorstehenden Aufgabe wird durch eine Einrichtung mit den Merkmalen des Anspruchs 1 erreicht. Die mit der Erfindung erzielten Vorteile bestehen insbesondere darin, dass ein in einem separaten Gehäuse angeordneter Ausgleichskolben einfach aufgebaut ist und in einfacher Weise kolbenstangenseitig vor dem Dämpfungskolben angeordnet werden kann, sodass eine größtmögliche radiale Abstützung der Kolbenstange am Dämpfergehäuse über den Dämpfungskolben erreicht wird.

Vorteilhafte Aus- und Weiterbildungen der Erfindung sind in den Ansprüchen 2 bis 7 beschrieben.

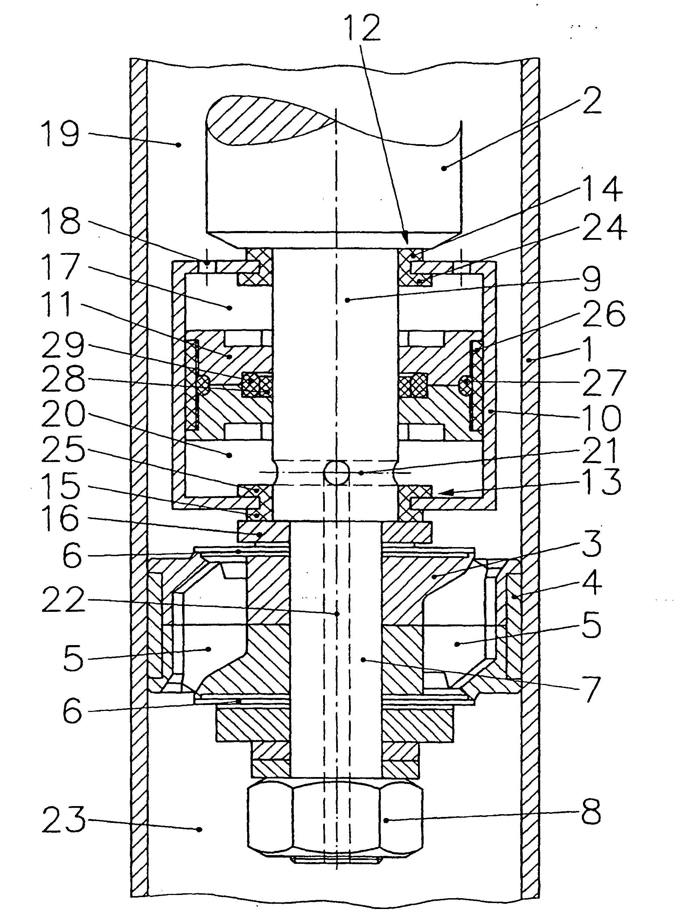

Ein Ausführungsbeispiel der Erfindung ist in der Zeichnung dargestellt und wird im Folgenden näher beschrieben.

Die einzige Figur zeigt einen Querschnitt durch einen Stoßdämpfer im Bereich des Endes der Kolbenstange.

Der Stoßdämpfer weist ein Dämpfergehäuse 1 auf, das mit Dämpfungsflüssigkeit gefüllt ist. Eine Kolbenstange 2 taucht oszillierend in das Dämpfergehäuse 1 ein. Das Dämpfergehäuse 1 ist einseitig geschlossen und weist auf der anderen Seite einen Durchtritt für die Kolbenstange 2 auf.

Am Ende der Kolbenstange 2 ist ein Dämpfungskolben 3 angeordnet, der radial in der Innenwand des Dämpfergehäuses 1 gleitet. Eine Manschette 4 dichtet den Dämpfungskolben 3 gegenüber dem Dämpfergehäuse 1 ab. Diese Manschette ist aus einem gut gleitenden Material hergestellt.

Durchbrüche 5 ermöglichen den Durchtritt der Dämpfungsflüssigkeit durch den Dämpfungskolben 3. Diese Durchbrüche 5 sind jeweils einseitig mittels Federscheibenpakete 6 abgeschlossen. Die Federscheibenpakete 6 wirken je nach Bewegungsrichtung der Kolbenstange 2 als Rückschlagventil bzw. bestimmen den Dämpfungsverlauf, abhängig von der Durchströmgeschwindigkeit der Dämpfungsflüssigkeit, durch die Durchbrüche 5.

Der Dämpfungskolben 3 ist auf einem endseitig an der Kolbenstange 2 angebrachten Bolzenende 7 aufgeschoben und wird mittels einer Mutter 8 mit der Kolbenstange 2 verschraubt.

Ein sich an das Bolzenende 7 anschließender Abschnitt 9 der Kolbenstange 2 weist einen gegenüber dem Bolzenende 7 größeren Durchmesser auf. Auf diesen Abschnitt 9 wird vor der Montage des Dämpfungskolbens 3 ein Gehäuse 10 aufgeschoben. Innerhalb des Gehäuses 10 befindet sich ein Ringkolben 11. Zum Einbringen des Ringkolbens 11 muss das Gehäuse 10 selbstverständlich mehrteilig ausgebildet sein. Diese mehrteilige Ausbildung ist jedoch zeichnerisch nicht dargestellt.

Das Gehäuse 10 ist als Zylinderkörper ausgebildet und weist an seinen Böden zentrale kreisförmige Öffnungen auf, die im Ausführungsbeispiel geringfügig größer sind als der Außendurchmesser des Abschnittes 9 der Kolbenstange 2. Innerhalb dieser Öffnungen sind Dichtungen 12, 13 angebracht, die das Gehäuse 10 gegenüber dem Abschnitt 9 radial abdichten. Die Dichtungen 12, 13 umfassen die zentralen Öffnungen des Gehäuses 10 U-förmig. Die äußeren Schenkel 14, 15 der Dichtungen 12, 13 legen sich radial an die Kolbenstange 2 bzw. eine zwischen Dämpfungskolben 3 und Gehäuse 10 angeordnete Andrückscheibe 16 an. Durch die Elastizität der äußeren Schenkel 14, 15 kann ein Toleranzausgleich hergestellt werden.

Der Ringkolben 11 ist im Gehäuse 10 axial beweglich und gegenüber dem Abschnitt 9 der Kolbenstange 2 und dem Innenmantel des Gehäuses 10 radial abgedichtet. Der dadurch entstehende obere Raum 17 im Gehäuse 10 ist hydraulisch über Bohrungen 18 mit dem oberen Dämpfungsraum 19 des Stoßdämpfers verbunden. Der untere Raum 20 des Gehäuses 10 ist hydraulisch über Querbohrungen 21 und eine zentrale Längsbohrung 22 durch die Kolbenstange 2 mit dem unteren Dämpfungsraum 23 des Stoßdämpfers verbunden. Bei Schwingungen der Kolbenstange 2 gegenüber dem Dämpfergehäuse 1 mit geringer Amplitude bewegt sich somit der Ringkolben 11 axial im Gehäuse 10, ohne dass sich die Federscheibenpakete 6 von den Auflagen oberhalb der Durchbrüche 5 abheben.

Die axiale Bewegung des Ringkolbens 11 ist durch die Länge des Gehäuses 10 begrenzt, wodurch dann auch die Größe der maximal durch den Ausgleichskolben ausgleichbaren Amplituden begrenzt wird. Um das Anschlagen des Ringkolbens 11 an die Böden des Gehäuses 10 abzufedern, können die inneren Schenkel 24, 25 der Dichtungen 12, 13 entsprechend als Kunststofffeder ausgebildet sein.

Im Ausführungsbeispiel ist der Ringkolben 11 zweiteilig mit zwei identischen axial aneinander liegenden Kolbenhälften ausgebildet. Der Ringkolben 11 gleitet gegenüber dem Innenmantel des Gehäuses 10 abgedichtet über eine Führungs- und Dichtungsmanschette 26, die wiederum durch einen Rundschnurring 27 vorgespannt wird. Dieser Rundschnurring 27 dient auch zum Zusammenhalten der Ringkolbenteile. Die Teile können aber auch in anderer Weise zusammengehalten werden. Die Abdichtung des Ringkolbens 11 gegenüber dem Abschnitt 9 der Kolbenstange 2 erfolgt über eine zweiteilige Dichtung, bestehend aus Gleitring 28 und Rundschnurring 29.

Der Durchmesser des Abschnitts 9 muss nicht, wie im Ausführungsbeispiel, gestuft zum Durchmesser des Bolzenendes 7 und/oder der Kolbenstange 2 ausgebildet sein. Er kann ebenso dem Durchmesser der Kolbenstange 2 oder dem Bolzenende 7 entsprechen.

### Bezugszeichenliste

- 1.: Dämpfergehäuse
- 2.: Kolbenstange
- 3.: Dämpfungskolben
- 4.: Manschette
- 5.: Durchbruch
- 6.: Federscheibenpaket
- 7.: Bolzenende
- 8.: Mutter
- 9.: Abschnitt
- 10.: Gehäuse
- 11.: Ringkolben
- 12.: Dichtung
- 13.: Dichtung
- 14.: äußerer Schenkel
- 15.: äußerer Schenkel
- 16.: Andrückscheibe
- 17.: oberer Raum
- 18.: Bohrung
- 19.: Dämpfungsraum
- 20.: unterer Raum
- 21.: Querbohrung
- 22.: Längsbohrung
- 23.: Dämpfungsraum
- 24.: innerer Schenkel
- 25.: innerer Schenkel
- 26.: Führungs- und Dichtungsmanschette
- 27.: Rundschnurring
- 28.: Gleitring
- 29.: Rundschnurring

## Patentansprüche

1. Einrichtung für hydraulische Schwingungsdämpfer mit einem am Ende einer oszillierend in ein Dämpfergehäuse (1) eintauchenden Kolbenstange (2) angeordneten, das Dämpfergehäuse (1) in zwei Dämpfungsräume (19, 23) teilenden Dämpfungskolben (3) und einem hydraulisch parallel zu diesem arbeitenden, in einem separaten Raum begrenzt beweglichen Kolben, **dadurch gekennzeichnet, dass** dieser Kolben als Ringkolben (11) ausgebildet ist, sich mit seinem Innendurchmesser auf einem Abschnitt (9) der Kolbenstange (2) bewegt, welcher Abschnitt (9) sich an die Befestigung für den Dämpfungskolben (3) anschließt und mit seinem Außendurchmesser innerhalb des hier angeordneten separaten Gehäuses (10) anliegt.

2. Einrichtung nach Anspruch 1, **dadurch gekennzeichnet, dass** der Abschnitt (9) der Kolbenstange (2) einen verringerten Durchmesser aufweist.

3. Einrichtung nach Anspruch 1 oder Anspruch 2, **dadurch gekennzeichnet, dass** der Ringkolben (11) an seinem Innendurchmesser und/oder seinem Außendurchmesser mit Gleitringen ausgebildet ist.

4. Einrichtung nach Anspruch 3, **dadurch gekennzeichnet, dass** die Gleitringe dichtend auf dem Abschnitt (9) der Kolbenstange (2) und/oder gegen die Innenbohrung des Gehäuses anliegen.

5. Einrichtung nach einem oder mehreren der Ansprüche 1 bis 4, **dadurch gekennzeichnet, dass** das Gehäuse (10) Böden mit zentralen Öffnungen aufweist und mit diesen Öffnungen auf den Abschnitt (9) der Kolbenstange (2) aufgeschoben ist.

6. Einrichtung nach Anspruch 5, **dadurch gekennzeichnet, dass** zwischen den zentralen Öffnungen des Gehäuses (10) und dem Abschnitt (9) der Kolbenstange (2) Dichtungen (12, 13) angeordnet sind.

7. Einrichtung nach Anspruch 6, **dadurch gekennzeichnet, dass** die Dichtungen (12, 13) einen U-förmigen Querschnitt aufweisen und die Böden des Gehäuses (10) beidseitig übergreifen.

## Claims

1. Device for hydraulic vibration dampers having a damping piston (3) which is disposed at the end of a piston rod (2) which is received in an oscillating manner into a damper housing (1), which damping piston divides the damper housing (1) into two damping chambers (19, 23), and having a piston which operates in a hydraulic manner parallel to said damping piston and moves to a limited extent in a separate chamber, **characterised in that** this piston is formed as an annular piston (11), moves with its inner diameter on a section (9) of the piston rod (2), which section (9) adjoins the attachment for the damping piston (3) and lies with its outer diameter inside the separate housing (10) disposed here.

2. Device as claimed in claim 1, **characterised in that** the section (9) of the piston rod (2) comprises a reduced diameter.

3. Device as claimed in claim 1 or claim 2, **characterised in that** the annular piston (11) is formed on its inner diameter and/or its outer diameter with slide rings.

4. Device as claimed in claim 3, **characterised in that** the slide rings lie in a sealing manner on the section (9) of the piston rod (2) and/or against the inner bore of the housing.

5. Device as claimed in any one or several of claims 1 to 4, **characterised in that** the housing (10) comprises bases with central apertures and is pushed with these apertures onto the section (9) of the piston rod (2).

6. Device as claimed in claim 5, **characterised in that** seals (12, 13) are disposed between the central apertures of the housing (10) and the section (9) of the piston rod (2).

7. Device as claimed in claim 6, **characterised in that** the seals (12, 13) comprise a U-shaped cross-section and engage over the bases of the housing (10) on both sides.

## Revendications

1. Système pour des amortisseurs hydrauliques, avec un piston d'amortissement (3), disposé à l'extrémité d'une tige de piston (2) plongeant de manière oscillante dans un carter d'amortissement (1), divisant le carter d'amortissement (1) en deux compartiments d'amortissement (19, 23), et un piston, travaillant hydrauliquement en parallèle sur celui-ci, mobile dans un compartiment séparé, **caractérisé en ce que** ce piston est réalisé sous la forme d'un piston annulaire (11), se déplace avec sa surface interne en contact avec une section (9) de la tige de piston (2), laquelle section (9) se raccorde à la fixation pour le piston d'amortissement (3), et se dispose avec sa surface externe à l'intérieur du carter (10) séparé.

2. Système selon la revendication 1, **caractérisé en ce que** la section (9) de la tige de piston (2) présente un diamètre réduit.

3. Système selon la revendication 1 ou la revendication 2, **caractérisé en ce que** le piston annulaire (11) est pourvu de bagues de glissement à sa surface interne et/ou à sa surface externe.

4. Système selon la revendication 3, **caractérisé en ce que** les bagues de glissement appuient de manière étanche contre la section (9) de la tige de piston (2) et/ou contre l'alésage interne du carter.

5. Système selon une ou plusieurs des revendications 1 à 4, **caractérisé en ce que** le carter (10) présente des bases percées d'ouvertures centrales, et est enfilé avec ces ouvertures sur la section (9) de la tige de piston (2).

6. Système selon la revendication 5, **caractérisé en ce que** par des joints (12, 13) sont agencés entre les ouvertures centrales du carter (10) et la section (9) de la tige de piston (2).

7. Système selon la revendication 6, **caractérisé en ce que** les joints (12, 13) présentent une section en U et chevauchent les bases du carter 10 de part et d'autre.
